# EUROPEAN PATENT APPLICATION

(11) **EP 2 672 722 A1**
(43) Date of publication of application: **11.12.2013**
(21) Application number: 13162025.4
(22) Date of filing: 02.04.2013
(51) Int. Cl.: H04N 21/41, H04N 21/436, H04N 5/44, H04N 5/445

(54) **Display apparatus, user terminal for controlling display apparatus and controlling method thereof**

(30) Priority: 07.06.2012 KR 20120061098
(71) Applicant: Samsung Electronics Co., Ltd, Gyeonggi-do 443-742 (KR)
(72) Inventor: Park, Sung-sik, Seoul (KR); Choi, Sung-hwan, Seoul (KR); Yang, Young-gyu, Gyeonggi-do (KR)
(74) Representative: Hewett, Jonathan Michael Richard

(57) **Abstract**

A display apparatus is provided. The display apparatus includes a display unit which displays a screen including at least one content, a communication unit which communicates with a user terminal to control an operation of the display apparatus, and a control unit which transmits screen data corresponding to at least a part of the screen to be displayed on the user terminal in accordance with a predetermined event and reconfigures the screen so that an area of the screen corresponding to the transmitted screen data is distinguished from remaining areas of the screen.

## Description

The present invention relates to a display apparatus, a user terminal for controlling a display apparatus, and a controlling method thereof, and more particularly, to a display apparatus, a user terminal for remotely controlling a display apparatus, and a controlling method thereof.

Recently, smart televisions have been widely used and as a result, users have developed high expectations in utilizing such televisions. To meet those high expectations, recently-developed televisions, which are based on a large-scale display screen, are providing various functions that have previously been provided by PC or smart phones, such as internet-based web browsing services, social networking services (SNS), mailing services, etc.

A large-scale display screen may provide a plurality of functions, like the web browsing service and the SNS service, on a single screen, but in order to control the plurality of functions on the single screen, the display screen needs to be controlled in a more sophisticated way.

It is difficult to use those functions with a prior art remote controller which is provided along with a prior art television. Therefore, a track ball and an optical sensor-based remote controller have been developed. However, with the remote controller based on an optical sensor, accurate control is only possible within a certain range. In addition, it is hardly possible to find an exact pointing spot with a prior art remote controller, and this may cause severe fatigue to users.

Exemplary embodiments of the present invention relate to an apparatus, a method, and a system for processing an image which allow a stereoscopic image to be accurately recognized by a left eye and a right eye and to a display apparatus, a display system, and a display method for displaying the stereoscopic image.

A display apparatus according to an exemplary embodiment includes a display unit which displays a screen including at least one content, a communication unit which communicates with a user terminal to control an operation of the display apparatus, and a control unit which transmits screen data corresponding to at least a part of the screen to be displayed on the user terminal in accordance with a predetermined event and reconfigures the screen so that an area of the screen corresponding to the transmitted screen data is distinguished from remaining areas of the screen.

The control unit may reconfigure the screen by displaying a border cursor on the area of the screen corresponding to the screen data transmitted to the user terminal.

The control unit, if coordinate information corresponding to a screen manipulation command is received from the user terminal, may control to transmit screen data corresponding to the received coordinate information to the user terminal.

The control unit may control to display the border cursor by enlarging, reducing, or moving the border cursor to the area corresponding to the screen data transmitted to the user terminal in accordance with the coordinate information.

The control unit may control to remove the border cursor from the screen if a user command is not received from the user terminal for a predetermined time.

The control unit, if the display apparatus communicates with a plurality of user terminals, may control to display border cursors in different forms for each of the plurality of user terminals on areas corresponding to screen data transmitted to each of the plurality of user terminals.

The control unit, if a user command to request the screen data is received from the user terminal, may control to transmit the screen data to the user terminal.

A user terminal to control an operation of a display apparatus, according to an exemplary embodiment, includes a communication unit which communicates with the display apparatus, a display unit which displays screen data received through the communication unit and corresponding to at least a part of a screen displayed on the display apparatus, a user interface unit which receives a screen manipulation command with respect to a screen at which the screen data is displayed, and a control unit which controls to transmit coordinate information corresponding to the screen manipulation command to the display apparatus, controls to receive screen data corresponding to the coordinate information from the display apparatus and controls to display the screen data.

A display system including a display apparatus and a user terminal, according to an exemplary embodiment, includes a display apparatus which displays a screen including at least one content, transmits screen data corresponding to at least a part of the screen to the user terminal in accordance with a predetermined event, and reconfigures and displays the screen so that an area of the screen corresponding to the transmitted screen data is distinguished from remaining areas of the screen and a user terminal which displays the screen data received from the display apparatus and controls an operation of the display apparatus through the displayed screen.

A method for controlling a display apparatus, according to an exemplary embodiment, includes displaying a screen including at least one content, transmitting screen data corresponding to at least a part of the screen to be displayed on the user terminal in accordance with a predetermined event, and reconfiguring the screen so that an area of the screen corresponding to the transmitted screen data is distinguished from remaining areas of the screen.

The reconfiguring the screen may include displaying a border cursor on the area of the screen corresponding to the screen data transmitted to the user terminal.

The transmitting screen data to the user terminal may include, if coordinate information corresponding to a screen manipulation command is received from the user terminal, transmitting screen data corresponding to the received coordinate information to the user terminal.

The reconfiguring the screen may include displaying the border cursor by enlarging, reducing, or moving the border cursor to the area corresponding to the screen data transmitted to the user terminal in accordance with the coordinate information.

The reconfiguring the screen may include removing the border cursor from the screen if a user command is not received from the user terminal for a predetermined time.

The reconfiguring the screen may include, if the display apparatus communicates with a plurality of user terminals, displaying border cursors in different forms for each of the plurality of user terminals on areas corresponding to screen data transmitted to each of the plurality of user terminals.

The transmitting screen data to the user terminal may include, if a user command to request the screen data is received from the user terminal, transmitting the screen data to the user terminal.

A method for controlling a user terminal to control an operation of a display apparatus, according to an exemplary embodiment, includes receiving screen data corresponding to at least a part of a screen displayed on the display apparatus, displaying a screen on the user terminal including the received screen data, receiving a screen manipulation command with respect to the screen at which the screen data is displayed, transmitting coordinate information corresponding to the screen manipulation command to the display apparatus, and receiving screen data corresponding to the coordinate information from the display apparatus and displaying the screen data on the display of the user terminal.

A method for controlling a display system including a display apparatus and a user terminal, according to an exemplary embodiment, includes displaying a screen including at least one content by a display apparatus, transmitting screen data corresponding to at least a part of the screen to the user terminal by a display apparatus in accordance with a predetermined event, reconfiguring the screen so that an area of the screen corresponding to the transmitted screen data is distinguishable from remaining areas of the screen and displaying the screen by the display apparatus, displaying the screen data received from the display apparatus by the user terminal, and controlling an operation of the display apparatus through a screen at which the screen data is displayed by a user terminal.

As described above, according to various exemplary embodiments, a user may intuitively control a display apparatus by using a user terminal and thus, user convenience may be improved.

The above and/or other aspects of the present invention will be more apparent by describing certain exemplary embodiments of the present invention with reference to the accompanying drawings, in which:
FIG. 1 is a view of a display system according to an exemplary embodiment;
FIG. 2 is a block diagram illustrating a configuration of a display apparatus 100 according to an exemplary embodiment;
FIG. 3 is a block diagram illustrating a configuration of a user terminal according to an exemplary embodiment;
FIG. 4 is a view illustrating an operation of a display system according to an exemplary embodiment;
FIG. 5 is a view illustrating an operation of reducing a border cursor according to an exemplary embodiment;
FIG. 6 is a view illustrating an operation of enlarging a border cursor according to an exemplary embodiment;
FIG. 7 is a view illustrating an operation of moving a border cursor according to an exemplary embodiment;
FIG. 8 is a view illustrating a display system according to another exemplary embodiment;
FIG. 9 is a block diagram illustrating a method of controlling a display apparatus according to an exemplary embodiment;
FIG. 10 is a block diagram illustrating a method of controlling a user terminal to control an operation of a display apparatus according to an exemplary embodiment; and
FIG. 11 is a block diagram illustrating a method of controlling a display system according to an exemplary embodiment.

Certain exemplary embodiments will now be described in more detail with reference to the accompanying drawings, in which exemplary embodiments are shown.

In the following description, same reference numerals are used for the same elements when they are depicted in different drawings. The matters defined in the description, such as detailed construction and elements, are provided to assist in a comprehensive understanding of the exemplary embodiments. However, it is apparent that the exemplary embodiments can be carried out without those specifically defined matters. Also, functions or elements known in the related art are not described in detail since they would obscure the exemplary embodiments with unnecessary detail.

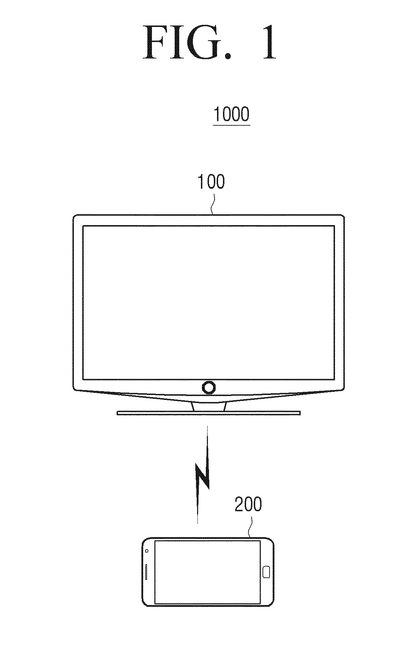

FIG. 1 is a view of a display system according to an exemplary embodiment. According to FIG. 1, a display system 1000 comprises a display apparatus 100 and a user terminal 200.

The display apparatus 100 displays a screen including at least one content and transmits screen data corresponding to at least a part of the display screen to the user terminal 200 in accordance with a predetermined event. In addition, the display apparatus 100 may display an area corresponding to the transmitted screen data by reconfiguring the area to be distinguishable from the remaining areas.

The predetermined event may be an event to connect the display apparatus 100 to the user terminal for communication, an event to execute an application to control a display apparatus using a user terminal in the display apparatus 100 or the user terminal 200, an event to receive a user command from the user terminal 200 by the display apparatus 100.

In an exemplary embodiment, the display apparatus 100 may reconfigure the screen so that a border cursor is displayed on at least a part of the display screen corresponding to the screen data transmitted to the user terminal 200.

The user terminal 200 may display the screen data received from the display apparatus 100 and may control an operation of the display apparatus 100 using the displayed screen.

In an exemplary embodiment, the user terminal may comprise a touch screen, may control the operation of the display apparatus 100 by touching the display screen, and may control a screen displayed on the user terminal 200 through an operation such as drag, multi-touch, etc.

A user may control the screen displayed on the user terminal 200 intuitively while viewing a border cursor displayed on the display apparatus 100 rather than viewing the screen displayed on the user terminal 200.

The user terminal 200 may be implemented as a mobile terminal apparatus with a display screen, such as a smart phone, a Personal Digital Assistant (PDA), a Portable Multimedia Player (PMP), a MP3 player, a notebook, etc.

In addition, the display apparatus 100 and the user terminal 200 may perform communication using a wireless communication technology such as Wifi, Bluetooth, ZigBee, Infrared Data Association (IRDA), Radio Frequency (RF), IEEE 802, WLAN, HR WPAN, UWB, LR WPAN, IEEE 1394, etc.

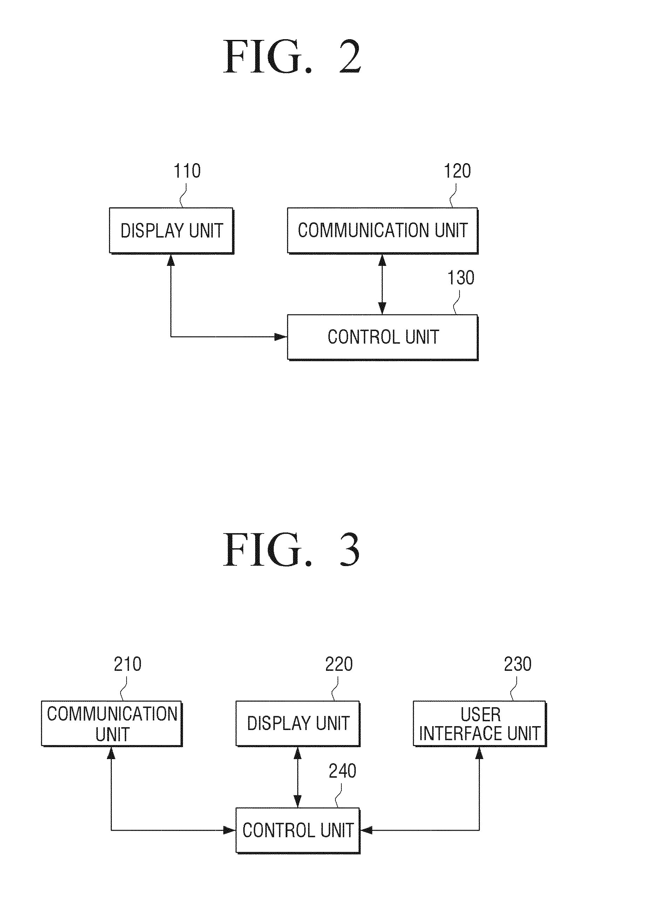

FIG. 2 is a block diagram illustrating a configuration of the display apparatus 100 according to an exemplary embodiment.

According to FIG. 2, the display apparatus 100 comprises a display unit 110, a communication unit 120, and a control unit 130.

The display unit 110 may display a screen including at least one content. Specifically, the display unit 110 may receive contents through a receiving unit (not shown) and may display a screen including the at least one content which is signal-processed by a signal processing unit (not shown).

The display unit 10 may be implemented as a display panel such as a Cathode Ray Tube (CRT), a Liquid Crystal Display (LCF), a Plasma Display Panel (PDP), an Organic Light Emitting Diodes (OLED), etc.

The communication unit 120 performs communication with the user terminal 200. Specifically, the communication unit 120 may transmit screen data corresponding to at least part of a screen displayed by the display unit 110 to a user terminal.

In addition, the communication unit 120 may receive a user command input through the user terminal 200 from the user terminal. In an exemplary embodiment, the communication unit 120 may receive information regarding coordinates corresponding to a screen manipulation command from the user terminal 200.

The control unit 130 may control overall operations of the display apparatus 100. Specifically, the control unit 130 may control to perform operations by controlling each component of the display apparatus 100.

In particular, the control unit 130 may control the communication unit 120 to transmit screen data corresponding to at least part of a displayed screen and reconfigure a display screen so that an area corresponding to the transmitted screen data is distinguishable from the remaining areas.

Specifically, the control unit 130 may reconfigure a display screen so that an area corresponding to the transmitted screen data is distinguishable from the remaining areas by displaying a border cursor on an area corresponding to screen data transmitted to the user terminal 200.

In addition, if information regarding coordinates corresponding to a screen manipulation command in a user terminal is received from the user terminal, the control unit 130 may control to transmit screen data corresponding to the received coordinate information to the user terminal 200.

If a user command is not received from the user terminal 200 for a predetermined time, the control unit 130 may control to remove the border cursor form the display screen of the display apparatus. Accordingly, the time when a user is interrupted by the border cursor when watching contents may be minimized.

FIG. 3 is a block diagram illustrating a configuration of a user terminal according to an exemplary embodiment.

According to FIG. 3, the user terminal 200 comprises a communication unit 210, a display unit 220, a user interface unit 230, and a control unit 240.

The communication unit 210 performs communication with the display apparatus 100. Specifically, the communication unit 210 may receive screen data corresponding to at least one of a screen displayed on the display apparatus 100 from the display apparatus. In addition, the communication unit 210 may transmit a user command received through the user interface unit 230 to the display apparatus 100.

A user command transmitted to the display apparatus 100 may be transmitted in the form of coordinate information regarding the display screen of the display apparatus 100.

The display unit 220 of the user terminal displays screen data which corresponds to the at least one screen displayed on the display apparatus and is received through the communication unit 210. The display unit 220 may be implemented as a display panel such as a Cathode Ray Tube (CRT), a Liquid Crystal Display (LCF), a Plasma Display Panel (PDP), an Organic Light Emitting Diodes (OLED), etc.

The user interface unit 230 receives a user command. Specifically, the user interface unit 230 may receive a user command to control the display apparatus 100 from a user. In particular, the user interface unit 230 may receive a screen manipulation command regarding the screen displayed on the display unit 220 of the user terminal.

The user interface unit 230 may be implemented as an apparatus such as a touch panel or a touch screen so that the display unit 220 and the user interface unit 230 may be implemented as a single component.

The control unit 240 may control overall operations of the user terminal 200. Specifically, the control unit 240 may control to perform operations by controlling each of the communication unit 210, the display unit 220, and the user interface unit 230.

In particular, the control unit 240 may control to transmit information regarding coordinates corresponding to a screen manipulation command received through the user interface unit 230 to the display apparatus 100, may receive screen data corresponding to the coordinate information from the display apparatus, and may display the screen data.

Hereinafter, operations of the display apparatus 100 and the user terminal 200 will be explained according to an exemplary embodiment.

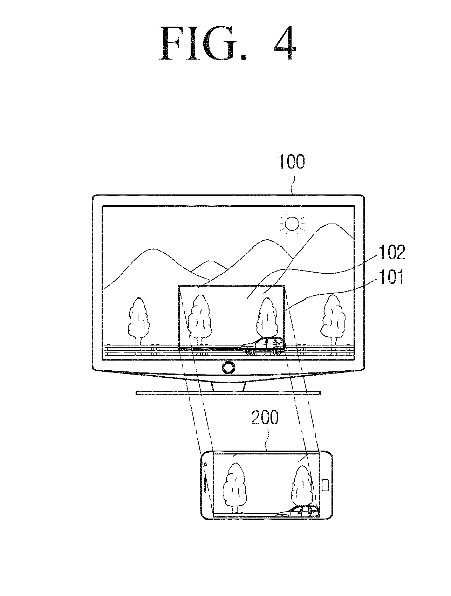

FIG. 4 is a view illustrating an operation of a display system according to an exemplary embodiment.

The display unit 110 of the display apparatus 100 may be connected to the user terminal 200 while displaying contents. For example, the display apparatus 100 and the user terminal 200 may be connected to each other by executing a specific interlocked application or by activating the communication unit 120 of the display apparatus 100 and the communication unit 210 of the user terminal 200. In addition, if a user input a user command to request screen data to display at least part of a display screen of the display apparatus 100 on the user terminal 200, the user terminal may transmit the user command to the display apparatus 100 through the communication unit 210.

The predetermined user command may be, for example, a command to execute an application to control a display apparatus which is pre-installed in the user terminal 200, a predetermined pattern or a touch which is input to the user interface unit 230 of the user terminal 200.

If a user command to request screen data is input on the user terminal 200 and transmitted to the display apparatus, the display apparatus may transmit screen data corresponding to at least a part of the screen of the display apparatus to the user terminal 200 through the communication unit 220.

The initial screen data transmitted to the user terminal may be screen data within a predetermined coordinate scope. That is, the initial screen data transmitted to the user terminal from the display apparatus 100 may be coordinates of a predetermined area on a display screen of the display apparatus 100, and the predetermined area may be changed by a user.

The user terminal may receive screen data from the display apparatus 100 and may display the screen data on the display unit 220. In addition, the display apparatus 100 may reconfigure the display screen so that an identification area which corresponds to the screen data transmitted to the user terminal 200 may be distinguishable from the remaining areas on the display screen of the display apparatus 100.

For example, as illustrated in FIG. 4, the display apparatus 100 may display a border cursor 101 or window on a boundary of a screen area 102 corresponding to screen data transmitted to the user terminal 200, and may highlight the corresponding screen area 102 or display the corresponding screen area using a different texture.

In the case of displaying a border cursor, the cursor may be displayed by using various shapes such as a straight line, a broken line, a chain line, a chain double-dashed line and various colors, may be highlighted, or may appear and disappear at predetermined intervals.

The above method for identifying an area of a display screen is provided by way of example, and any method for distinguishing a screen area, the screen data of which is transmitted to a user terminal, from the remaining areas of the display screen may be used. In addition, the above method may be changed by a user.

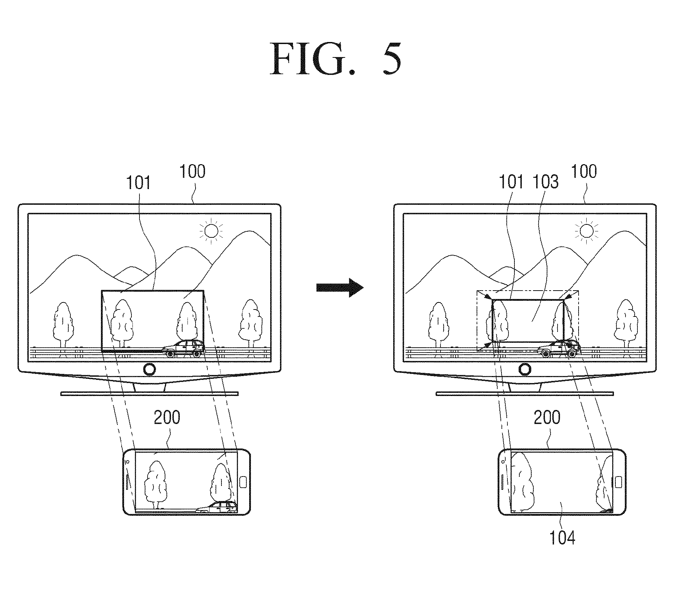

If a user inputs a screen manipulation command to change a screen displayed on the user terminal 200, the identification area displayed on the display screen of the display apparatus 100 may be changed, as illustrated in FIGS. 5 to 7.

FIG. 5 is a view illustrating an operation of reducing a border cursor according to an exemplary embodiment.

Referring to FIG. 5, a part of the display screen displayed on the display apparatus 100 is displayed on the user terminal 200, and the display apparatus 100 displays a border cursor on the part of the area of the display screen of the display apparatus 100, which is also displayed on the user terminal 200.

If a user inputs a screen manipulation command to enlarge a view on the screen displayed on the user terminal 200 in greater detail, the display apparatus 100 may transmit to the user terminal 200 screen data of a smaller area of the display screen displayed on the display apparatus 100 in accordance with the screen manipulation command. In addition, the border cursor 101 is reduced to fit the smaller area 103 corresponding to the transmitted screen data of the smaller area of the display screen displayed on the display apparatus 100. The user terminal 200 may provide an enlarged screen 104 to a user by receiving screen data and displaying a screen of the smaller area of the display screen displayed on the display apparatus.

More specifically, a user may input a predetermined screen manipulation command to enlarge the screen on the user interface unit 230 of the user terminal 200. If the interface unit 230 of the user terminal 200 receives the screen manipulation command, the control unit 240 may calculate coordinate information in accordance with the screen manipulation command.

For example, if the user interface unit 230 is implemented as a touch panel, a user may multi-touch the touch panel using two fingers, and may input a user manipulation command of widening the distance between the two fingers.

The control unit 240 may calculate coordinates of image data to be received from the display apparatus 100 as the distance between two multi-touched pointers increase. The calculated coordinates may be calculated in proportion to the distance between the two pointers. Such coordinates refer to pixel coordinates of the display unit 110 of the display apparatus 100 and may be represented as ((x1, y1), (x2, y2)). The coordinates (x1, y1) refer to coordinates of a vertex of the border cursor, that is, coordinates of the vertex of the border cursor around screen data transmitted to the user terminal, and the coordinates (x2, y2) refer to coordinates of a vertex which is located on a diagonal line through the screen area on the display apparatus surrounded by the border cursor.

For example, if the coordinates of the image data, which is initially received, are ((50, 50), (250, 200)), the control unit 240 may calculate new coordinates of ((90, 80), (210, 170)) in accordance with the user manipulation command. The calculated coordinate information is transmitted to the display apparatus 100 through the communication unit 210.

If coordinate information is received from the user terminal 200, the display apparatus 100 transmits screen data corresponding to the coordinate information to the user terminal 100, and may reduce the border cursor to the smaller screen area 103 corresponding to the transmitted screen data and may display the border cursor 101. In addition, the user terminal 200 may provide the enlarged screen 104 to a user by displaying the newly-received screen data.

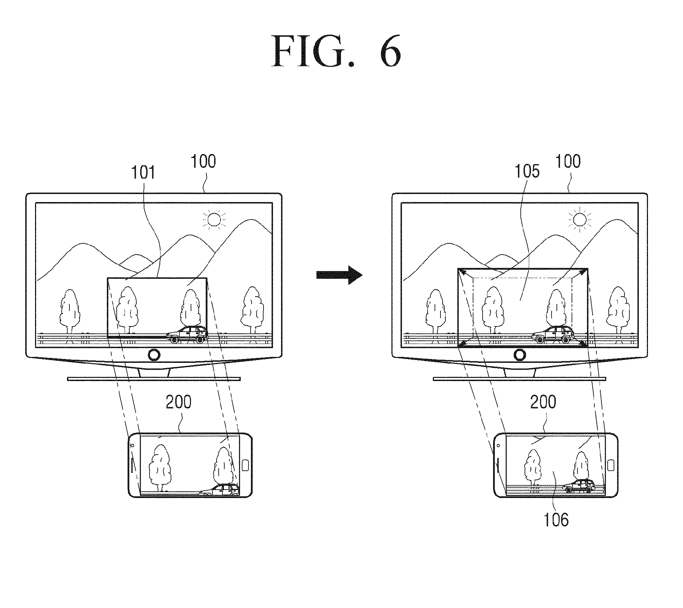

FIG. 6 is a view illustrating an operation of enlarging a border cursor according to an exemplary embodiment.

Referring to FIG. 6, a part of the screen displayed on the display apparatus 100 is displayed on the user terminal 200, and in the display apparatus 100, a border cursor 101 is displayed on the part of the area of the display screen of the display apparatus 100, which is also displayed on the user terminal 200.

If a user inputs a screen manipulation command to reduce a view on the screen displayed on the user terminal 200, the display apparatus 100 may transmit screen data of the broader area 105 to the user terminal 200 in accordance with the screen manipulation command. In addition, the border cursor 101 in enlarged to the broader area 105 corresponding to the transmitted screen data of the broader area of the display screen displayed on the display apparatus. The user terminal 200 may receive and display a broader screen 106 of the broader area 105 so as to provide the more comprehensive area to the user.

In order to receive a broader screen 106 of a broader area 105, a user may multi-touch a touch panel using two fingers and input a user manipulation command of narrowing the distance between the two fingers. Accordingly, a user may receive the broader screen through the user terminal 200. The detailed operation of enlarging a border cursor 101 is similar to the operation of reducing the border cursor 101 which has been explained above with reference to FIG. 5 and thus, further description will be omitted.

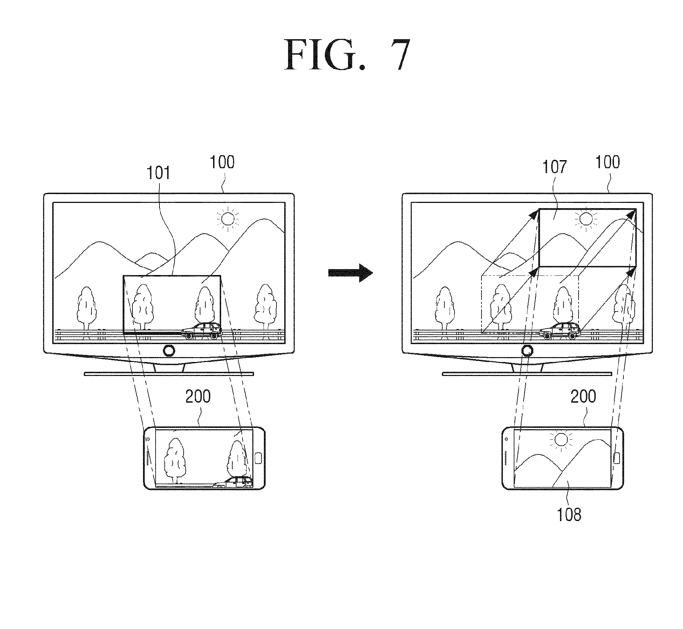

FIG. 7 is a view illustrating an operation of moving a border cursor according to an exemplary embodiment.

Referring to FIG. 7, a part of the display screen displayed on the display apparatus 100 is displayed on the user terminal 200, and the display apparatus 100 displays a border cursor 101 on the part of the area of the display screen apparatus 100, which is also displayed on the user terminal 200.

If a user inputs a screen manipulation command to move a view on the screen displayed on the user terminal 200, the display apparatus 100 may transmit to the user terminal 200 screen data of the moved area 107 in accordance with the screen manipulation command. In addition, the border cursor 101 is moved to the moved area 107 corresponding to a moved screen 108 on the user terminal 200. The user terminal 200 may receive the screen data of the moved area 107 and display the moved screen 108 of the moved area 107. In this case, the size of the data area transmitted to the user terminal 200 from the display apparatus 100 does not change, and only the location of the moved area may be changed.

For example, if the user interface unit 230 is implemented as a touch panel, a user may touch a touch panel using one finger to receive screen data of the moved area 107 and input a user manipulation command of moving the touch finger in a specific direction.

The control unit 240 may calculate coordinates of image data to be received from the display apparatus 100 as a touched point moves. For example, if coordinates of initially-received image data are ((50, 50), (250, 200)) and a user moves a touched finger in an upper right direction, the control unit 240 may calculate coordinates of ((150, 150), (350, 300)) in accordance with the user manipulation command. The calculated coordinate information is transmitted to the display apparatus 100 through the communication unit 210.

If the coordinate information is received from the user terminal 200, the display apparatus 100 transmits screen data corresponding to the coordinate information to the user terminal 100. In addition, the display apparatus 100 may move a border cursor 101 to the screen area corresponding to the transmitted screen data and may display the screen data. Further, the user terminal may provide the moved screen 108 to a user by displaying the newly-received screen data.

The operations which have been explained above with reference to FIGS. 4 to 7 may be performed continuously in prompt response to the corresponding screen manipulation commands from a user. For example, if a user inputs a screen manipulation command to move a screen displayed on the user terminal 200, coordinates of ((60, 60), (260, 2io)), ((70, 70), (270, 220)), ..., ((150, 150), (350, 300)) are transmitted to the display apparatus continuously in accordance with the screen manipulation command from the user, and the display apparatus 100 may transmit screen data corresponding to the received coordinates continuously to the user terminal 200 and move and display the border cursor 101.

Accordingly, the user terminal 200 may provide a user with a display screen which is smoothly changed without interruption. In addition, the user terminal 200 may also change the border cursor 101 displayed on the display screen of the display apparatus 100 smoothly.

The display apparatus 100 may also control to remove the border cursor 101 from the display screen if a screen manipulation command is not received from the user terminal for a predetermined time.

For example, if the user interface unit 230 of the user terminal 200 is implemented as a touch pad, the display apparatus 100 may control to remove the border cursor from the display screen of the display apparatus as soon as a user stops a touch input. Alternately, the display apparatus 100 may control to remove the border cursor from the display screen in a predetermined period of time, such as within two seconds from the time a user stops a touch input.

Even after a border cursor disappears when a screen manipulation command is not received from the user terminal 200 for a predetermined time, the display apparatus 100 may transmit screen data corresponding to recently-received coordinate information continuously to the user terminal 200. Accordingly, screen data may be displayed on the user terminal 200 even if a user does not input a screen manipulation command.

If a user inputs a screen manipulation command again after a border cursor 101 is removed from a display screen of the display apparatus 100, the display apparatus 100 may display the same border cursor 101 in a same way as the border cursor was displayed for the last time.

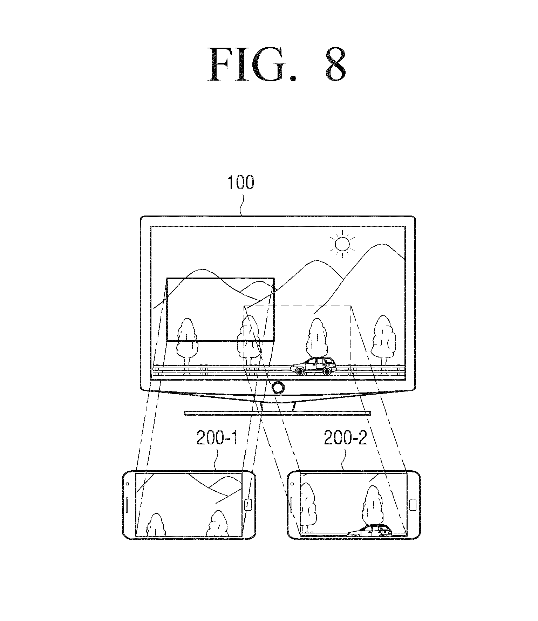

FIG. 8 is a view illustrating a display system according to another exemplary embodiment.

According to FIG. 8, a display system comprises the display apparatus 100 and a plurality of user terminals 200-1, 200-2. Each of the plurality of user terminals 200-1, 200-2 is connected to the display apparatus 100. The display apparatus 100 may receive a user command from each of the plurality of user terminals 200-1, 200-2, and the display apparatus 100 and each of the plurality of user terminals 200-1, 200-2 may be operated in a similar way as the display apparatus 100 and the user terminal 200 which have been explained above with reference to FIG. 1 and FIG. 4. Therefore, the detailed description regarding this operation will be omitted.

However, the display apparatus 100 may display different areas corresponding to different screen data which is transmitted to different user terminals of the plurality of user terminals 200-1, 200-2 in different ways. For example, different areas corresponding to screen data which is transmitted to different user terminals of the plurality of user terminals 200-1, 200-2 may be displayed using border cursors in different colors or different shapes as illustrated in FIG. 8. Alternatively, an area corresponding to screen data which is transmitted to user terminal 200-1 may be displayed using a border cursor, and an area corresponding to screen data which is transmitted to user terminal 200-2 may be highlighted. A user may change the method for displaying an area corresponding to screen data which is transmitted to each of the plurality of user terminals 200-1, 200-2 in a distinguishable way.

In FIG. 8, the plurality of user terminals is represented by two user terminals. However, there is no limit to the number of user terminals connected to the display apparatus, i.e, more than two user terminals may be connected to the display apparatus.

In addition, in the above exemplary embodiments, the display apparatus 100 receives coordinate information from the user terminal 200, transmits only screen data of the corresponding area to the user terminal 200, and the user terminal 200 displays the received screen data. However the display apparatus 100 may also transmit screen data of the entire area of the display screen to the user terminal 200, and the user terminal 200 may display only a part of the received entire screen data in accordance with a user manipulation command.

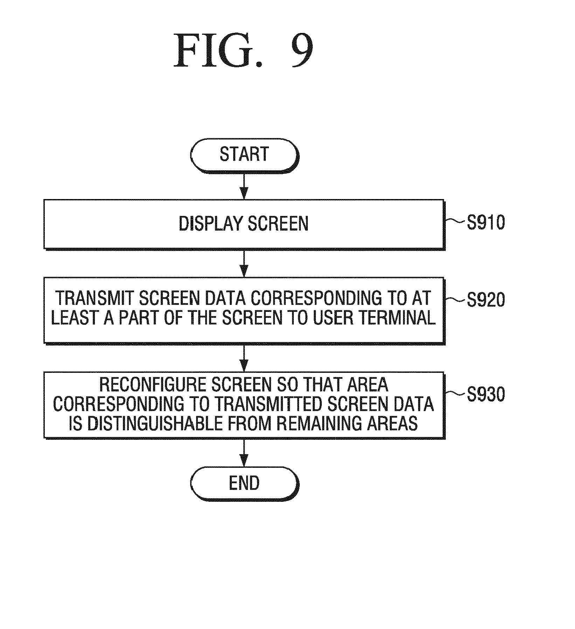

FIG. 9 is a block diagram illustrating a method of controlling a display apparatus according to an exemplary embodiment. As the configurations and operations of the display apparatus 100 and the user terminal 200 have already been explained above, they will only be described briefly.

According to FIG. 9, a screen including at least one content is displayed (S910) on the display screen. Subsequently, screen data corresponding to at least a part of the screen is transmitted to a user terminal in order to display it on the user terminal in accordance with a predetermined event (S920).

The operation of transmitting screen data to the user terminal (S920) may comprise transmitting screen data to the user terminal if a user command to request the screen data is received from the user terminal.

In addition, the operation of transmitting screen data to the user terminal (S920) may comprise, if coordinate information corresponding to a screen manipulation command is received from a user terminal, transmitting screen data corresponding to the received coordinate information to the user terminal.

In addition, a screen is reconfigured so that an area corresponding to the transmitted screen data is displayed distinctively from the remaining areas (S930). The operation of reconfiguring the screen (S930) may comprise reconfiguring the screen by displaying a border cursor on an area on the display screen which corresponds to the screen data transmitted to the user terminal. If a user command is not received from the user terminal, the border cursor may be removed from the screen.

In addition, the step of reconfiguring a screen (S930) may comprise receiving coordinate information from a user terminal, transmitting screen data corresponding to the coordinate information to the user terminal (S920), and displaying a border cursor by enlarging or reducing it on at least a part of the screen corresponding to the transmitted screen data.

If the display apparatus communicates with a plurality of user terminals, the operation of reconfiguring a screen (S930) may comprise displaying different border cursors in different forms on different areas corresponding to screen data transmitted to different user terminals.

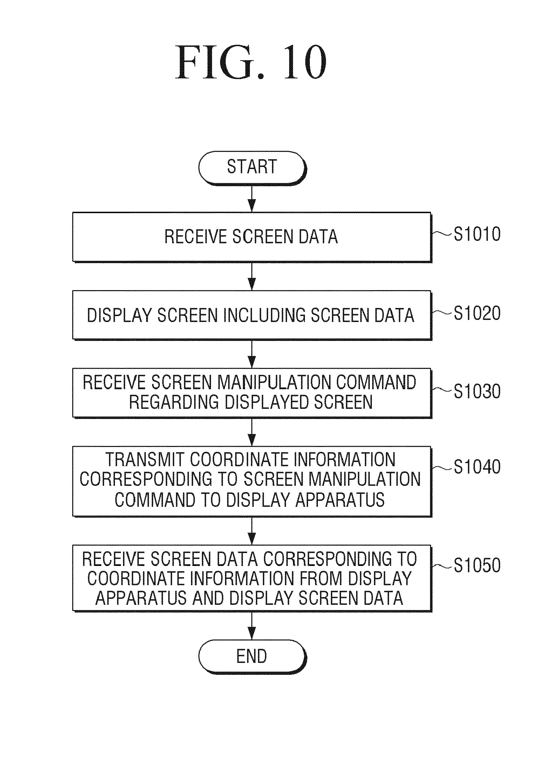

FIG. 10 is a view to explain a method for controlling a user terminal to control an operation of a display apparatus according to an exemplary embodiment.

According to FIG. 10, the user terminal 200 receives screen data from a display apparatus (S1010). Specifically, the user terminal 200 may receive data corresponding to at least a part of the screen displayed on the display apparatus. Subsequently, the received screen data is displayed (S1020). Afterwards, a screen manipulation command regarding a screen displayed on the user terminal 200 is received (S1030) from a user. The coordinate information corresponding to the screen manipulation command is transmitted to the display apparatus (S1040). Specifically, the user terminal 200 may analyze the screen manipulation command received in step S1030, calculate the corresponding coordinate information, and transmit it to the display apparatus. In addition, the user terminal 200 receives screen data corresponding to the coordinate information from the display apparatus and displays the screen data (S1050).

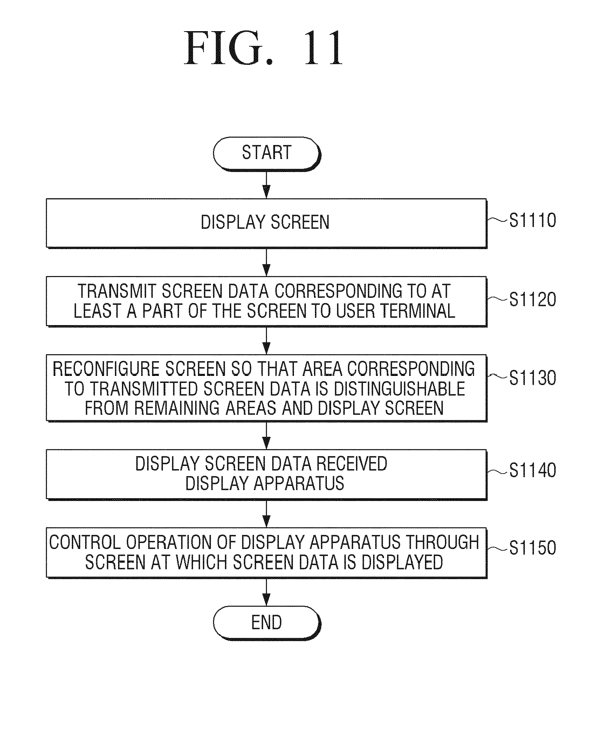

FIG. 11 is a block diagram illustrating a method of controlling a display system according to an exemplary embodiment.

According to FIG. 11, a display apparatus displays a screen including at least one content (S1110). The display apparatus transmits screen data corresponding to at least a part of the screen in accordance with a predetermined event to a user terminal (S1120). Subsequently, the display apparatus reconfigures and displays the screen so that an area corresponding to the screen data transmitted to the user terminal is displayed distinctively from the remaining areas (S1130) of the screen. The user terminal may display the screen data received from the display apparatus ₍S1040) and control an operation of the display apparatus through the screen of the user terminal on which the screen data is displayed (S1050). Herein, the user terminal receives a user command to control an operation of the display apparatus, and may include not only a user command to control the display apparatus directly (for example, a user command to execute an application of the display apparatus) but also a screen manipulation command to control the screen displayed on the user terminal.

The foregoing exemplary embodiments and advantages are merely exemplary and are not to be construed as limiting the present invention. The present teaching can be readily applied to other types of apparatuses, methods and systems. Also, the description of the exemplary embodiments of the present invention is intended to be illustrative, and not to limit the scope of the claims, and many alternatives, modifications, and variations will be apparent to those skilled in the art.

## Claims

1. A display apparatus, comprising:
a display unit which displays a screen including at least one content;
a communication unit which communicates with a user terminal to control an operation of the display apparatus; and
a control unit which transmits screen data corresponding to at least a part of the screen to be displayed on the user terminal in accordance with a predetermined event and reconfigures the screen so that an area of the screen corresponding to the transmitted screen data is distinguished from remaining areas of the screen.

2. The apparatus as claimed in claim 1, wherein the control unit reconfigures the screen by displaying a border cursor on the area of the screen corresponding to the screen data transmitted to the user terminal.

3. The apparatus as claimed in claim 2, wherein the control unit, if coordinate information corresponding to a screen manipulation command is received from the user terminal, controls to transmit screen data corresponding to the received coordinate information to the user terminal.

4. The apparatus as claimed in claim 3, wherein the control unit controls to display the border cursor by enlarging, reducing, or moving the border cursor to the area corresponding to the screen data transmitted to the user terminal in accordance with the coordinate information.

5. The apparatus as claimed in claim 2, wherein the control unit controls to remove the border cursor from the screen if a user command is not received from the user terminal for a predetermined time.

6. The apparatus as claimed in claim 2, wherein the control unit, if the display apparatus communicates with a plurality of user terminals, controls to display border cursors in different forms for each of the plurality of user terminals on areas corresponding to screen data transmitted to each of the plurality of user terminals.

7. The apparatus as claimed in any one of the preceding claims, wherein the control unit, if a user command to request the screen data is received from the user terminal, controls to transmit the screen data to the user terminal.

8. A user terminal to control an operation of a display apparatus, comprising:
a communication unit which communicates with the display apparatus;
a display unit which displays screen data received through the communication unit and corresponding to at least a part of a screen displayed on the display apparatus;
a user interface unit which receives a screen manipulation command with respect to a screen at which the screen data is displayed; and
a control unit which controls to transmit coordinate information corresponding to the screen manipulation command to the display apparatus, controls to receive screen data corresponding to the coordinate information from the display apparatus and controls to display the screen data.

9. A display system including a display apparatus and a user terminal, comprising:
a display apparatus which displays a screen including at least one content, transmits screen data corresponding to at least a part of the screen to the user terminal in accordance with a predetermined event, and reconfigures and displays the screen so that an area of the screen corresponding to the transmitted screen data is distinguished from remaining areas of the screen; and
a user terminal which displays the screen data received from the display apparatus and controls an operation of the display apparatus through the displayed screen.

10. A method for controlling a display apparatus, comprising:
displaying a screen including at least one content;
transmitting screen data corresponding to at least a part of the screen to be displayed on the user terminal in accordance with a predetermined event; and
reconfiguring the screen so that an area of the screen corresponding to the transmitted screen data is distinguished from remaining areas of the screen.

11. The method as claimed in claim 10, wherein the reconfiguring the screen comprises displaying a border cursor on the area of the screen corresponding to the screen data transmitted to the user terminal.

12. The method as claimed in claim 11, wherein the transmitting screen data to the user terminal comprises, if coordinate information corresponding to a screen manipulation command is received from the user terminal, transmitting screen data corresponding to the received coordinate information to the user terminal.

13. The method as claimed in claim 12, wherein the reconfiguring the screen comprises displaying the border cursor by enlarging, reducing, or moving the border cursor to the area corresponding to the screen data transmitted to the user terminal in accordance with the coordinate information.

14. A method for controlling a user terminal to control an operation of a display apparatus, comprising:
receiving screen data corresponding to at least a part of a screen displayed on the display apparatus;
displaying a screen on the user terminal including the received screen data;
receiving a screen manipulation command with respect to the screen at which the screen data is displayed;
transmitting coordinate information corresponding to the screen manipulation command to the display apparatus; and
receiving screen data corresponding to the coordinate information from the display apparatus and displaying the screen data on the display of the user terminal.

15. A method for controlling a display system including a display apparatus and a user terminal, comprising:
displaying a screen including at least one content by a display apparatus;
transmitting screen data corresponding to at least a part of the screen to the user terminal by a display apparatus in accordance with a predetermined event;
reconfiguring the screen so that an area of the screen corresponding to the transmitted screen data is distinguishable from remaining areas of the screen and displaying the screen by the display apparatus;
displaying the screen data received from the display apparatus by the user terminal; and
controlling an operation of the display apparatus through a screen at which the screen data is displayed by a user terminal.
